# EUROPEAN PATENT SPECIFICATION

(11) **EP 1 953 973 B1**
(45) Date of publication and mention of the grant of the patent: **13.02.2013**
(21) Application number: 06817853.2
(22) Date of filing: 20.11.2006
(51) Int. Cl.: H04L 12/70, H04L 29/08, H04L 29/12

(54) **Service device switch network, switch method and service router**
Diensteinrichtungsschaltnetzwerk, Schaltverfahren und Dienstrouter
Réseau de commutation de dispositif de service, procédé de commutation et routeur de service

(30) Priority: 18.11.2005 CN 200510110520
(43) Date of publication of application: 06.08.2008
(73) Proprietor: Huawei Technologies Co., Ltd., Longgang District, Shenzhen Guangdong 518129 (CN)
(72) Inventor: CHE, Haiping, Guangdong 518129 (CN); LI, Yan, Guangdong 518129 (CN)
(74) Representative: Kreuz, Georg Maria
(86) International application number: PCT/CN2006/003115
(87) International publication number: WO 2007/056960

(56) References cited:
- WO-A1-2004/006518
- CN-A- 1 194 079
- CN-A- 1 373 954
- US-A1- 2003 069 922
- US-A1- 2005 044 197

## Description

The present application claims the priority of Chinese Patent Application No. 200510110520.9, entitled as "Switching Network and Switching Method for Service Device", and filed with the Chinese Patent Office on November 18, 2005.

### Field of the Invention

The present invention relates to a switching technique between service devices, in particular to a service device, and a switching network and a switching method for the same.

### Background of the Invention

As the communication technology develops increasingly, a sophisticated voice communication service can be provided to a subscriber by means of a fixed communication network such as a Public Switched Telephone Network (PSTN) and a mobile communication network such as a Global System for Mobile Communication (GSM). In the PSTN and the GSM, a fundamental call service, such as a telephone call and a roaming service, is implemented. In addition, special requirement for a can, such as routing and addressing, of a call service is met by means of a fixed intelligent network and a mobile intelligent network.

Today, a simple voice call service can not satisfy a subscriber who expects more advanced and more complex services such as a multimedia messaging service, a network access service and a video service. In order to provide these complex application services, a plurality of service servers may be required at the network side to collaborate with each other. In other words, among the plurality of service servers, the services provided by some service servers may need to be invoked by other service servers. The service mentioned in the present invention refers to a service function provided by a service server, which may be a service directly provided to a subscriber, such as a short message service, or a service function provided to other service servers in the network, such as an online or offline accounting function, One service server can provide one or more services, and one service can be provided by one service server individually or provided jointly by several servers in a distributed manner.

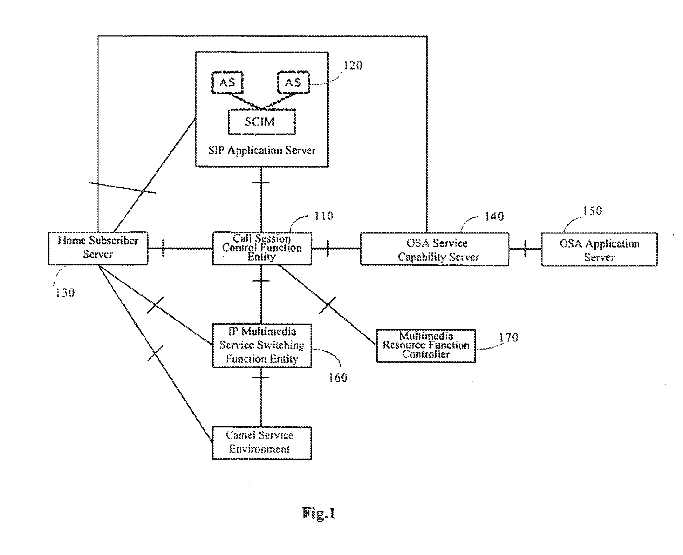

A currently typical service system is provided by means of a system of an IP Multimedia Subsystem (IMS). The IMS is a target network for a 3^{rd} Generation (3G) mobile network to implement a packet voice and packet data service and to provide unified multimedia service and application. An Internet Protocol (IP) packet domain is employed by the IMS as a bearing channel for control signaling and media transmission thereof, and a Session Initiation Protocol (SIP) is employed as call control signaling, so that it is implemented that service management, session control and bearing access are separated. A structure of the IMS is shown in Figure 1, in which devices involved include a Call Session Control Function (CSCF) entity 110, an Application Server (AS) 120, a Home Subscriber Server (HSS) 130, an Open Service Access (OSA) service capability server 140, an OSA application server 150, an IP Multimedia Service Switching Function (IM-SSF) entity 160 and a Multimedia Resource Function Controller (MRFC) 170. In the IMS, a service system is based on a service triggering mode of the CSCF and a call protocol for multimedia is employed, so that more service functions can be accomplished.

In the IMS, when a service server (for example, the AS) is needed to invoke a service A provided by another service server, address of the service server that serves as a service provider and a port via which the service A is to be provided have to be set in advance in the service server that acts as the service subscriber, and the service provided by the service server that serves as the service provider can be obtained by sending a request message to the address and port.

Such a method for obtaining the service from a service server that serves as the service provider by sending a message to the actual address of the service server that serves as the service provider is also widely used in a PSTN fixed intelligent network and a GSM mobile intelligent network.

However, the scheme mentioned above has a problem for maintenance. For example, if the service A is changed to be provided by another service server, the setting related to the service A has to be modified in the service server that acts as the service subscriber. If the service server required to invoke service A is not one specific service server, but includes several tens or hundreds of service servers, the setting in each of the service servers has to be modified, which involves extremely heavy workload.

US 2003/0069922 A1 discloses solutions for performing transactions involving multiple service providers over a service network.

### Summary of the Invention

The present invention provides a service device, and a switching network and a switching method for the same, which can implement switching on a service layer and thereby reduce difficulty for maintenance on the service layer.

According to one aspect of the present invention, a switching network for a service device includes: at least two service servers designed to communicate with a service information center and at least one service router; wherein the at least two service servers are designed to provide processing capability for at least one service; a service information center designed to store routing information of various services handled by each of the service servers; and at least one service router designed to route and forward a service interaction request from the service server and a response according to the routing information in the service information center, wherein
the routing information comprises logic destination addresses and physical addresses of various services handled by each service server and correspondence relationship between the logic destination addresses and the physical addresses, and the logic destination address of a service is designed to uniquely identify the requested service provided on a service server, and the physical address of a service is designed to identify the service server that provides the service; and
a service control center designed to perform scheduling and policy control for various services across the entire network, wherein a shared invocation capability for the same service may be distributed to a plurality of service servers under assistance of the service control center; and the service router comprises:
the searching unit is a physical address searching unit designed to search for the corresponding physical address in a service information center according to the logic destination address of the requested service in the service interaction request from the service server;
a forwarding unit designed to forward the service interaction request to the service server that provides the service according to the physical address, and to forward the received response to the service interaction request to the service server that initiates the service interaction request; and
a control center interacting unit designed to route the service interaction request to the service control center for policy control if contents of the received service interaction request meets criteria set in advance, and to accomplish subsequent routing related to the service interaction request according to an instruction from the service control center.

According to another aspect of the present invention, a switching method for a service device applicable to the network described above includes: sending, by a service server, to a service router a service interaction request with the information of the requested service; searching for corresponding routing information, by the service router, in a service information center according to the information of the requested service in the service interaction request from the service server; forwarding the service interaction request to a service server that provides the service according to the routing information; and forwarding, by the service router, a received response to the service interaction request to the service server that initiates the service interaction request wherein the information carried in the service interaction request comprises logic destination address of the requested service, routing, by the service router, the service interaction request to a service control center when the service interaction request is received and if contents of the service interaction request meets criteria set in advance; performing, by the service control center, policy control for the received service interaction request, and sending an instruction to the service router, wherein a shared invocation capability for the same service may be distributed to a plurality of service servers under assistance of the service control center(C, 600); accomplishing, by the service router, subsequent routing related to the service interaction request according to the instruction from the service control center(C, 600); and
the routing information comprises logic destination address and physical address of the service, and the correspondence relationship between the logic destination address and the physical address, and
the logic destination address of a service is designed to uniquely identify a service provided on a service server, and
the physical address of a service is the IP address and corresponding port number of the service server that provides the service, and
wherein the searching for the corresponding routing information in the service information center comprises: searching for the corresponding physical address according to the logic destination address of the requested service.

In another aspect of the present invention, a service router includes: a searching unit designed to search for routing information of a requested service after receiving a service interaction request from a service server; and a forwarding unit designed to route and forward the service interaction request from the service server and a response according to the routing information, wherein the routing information comprises logic destination addresses and physical addresses of various services handled by each service server and correspondence relationship between the logic destination addresses and the physical addresses, a control center interacting unit designed to route the service interaction request to a service control center for policy control if contents of the received service interaction request meets criteria set in advance, and to accomplish subsequent routing related to the service interaction request according to an instruction from the service control center, wherein the service control center performs scheduling and policy control for various services across the entire network, wherein a shared invocation capability for the same service may be distributed to a plurality of service servers under assistance of the service control center, and
the logic destination address of a service is designed to uniquely identify the requested service provided on a service server, and
the physical address of a service is designed to identify the service server that provides the service; and
the searching unit is a physical address searching unit designed to search for the corresponding physical address in a service information center according to the logic destination address of the requested service in the service interaction request from the service server.

According to the present invention, internal switching on the service layer can be implemented. The routing information of various services handled by various service servers is stored in the service information center. When a service is invoked, the routing information is searched by the service router from the service information center, and a message is routed and forwarded according to the routing information, which can facilitate the setting by the subscriber. Especially, in case the service server that provides the service is changed, the subscriber who wants to invoke a corresponding service does not need to make any change to the setting; instead, it only needs the operator to modify the routing information of that service in the service information center; therefore, which reduces the maintenance cost of the subscriber.

### Brief Description of the Drawings

Figure 1 is a schematic diagram of the IMS network structure in the prior art;

Figure 2 is a structural representation of a switching network for a service device according to an embodiment of the present invention;

Figure 3 is a schematic flow diagram of message interaction upon service routing according to an embodiment of the present invention;

Figure 4 is a structural block diagram of a service router according to an embodiment of the present invention;

Figure 5 is a structural block diagram of a service server according to an embodiment of the present invention.

### Detailed Description of the Embodiments

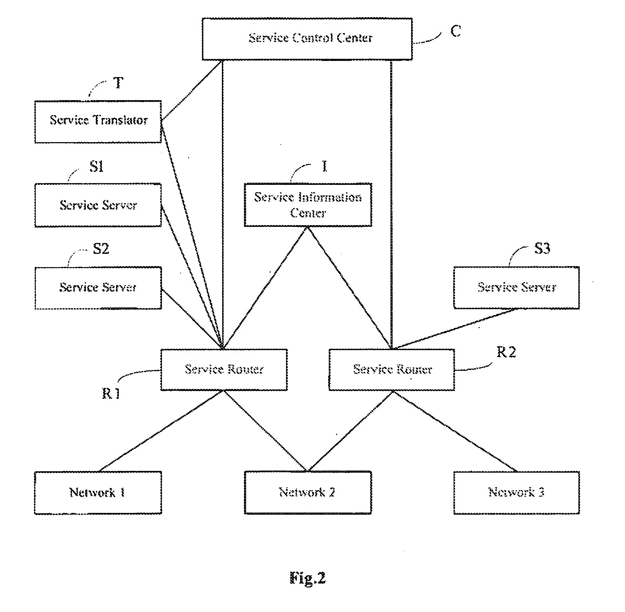

The switching network for the service device according to an embodiment of the present invention is shown in Figure 2.

It should be noted that only the networking and signaling in an IP network is described in embodiments. It should be understood by those skilled in the art that the present invention is also applicable to a fixed PSTN network, a mobile GSM/CDMA (Code Division Multiple Access) network, a 3G mobile communication IP network and Internet.

The network includes service serversS1, S2, and S3, a service information center I, service routers R1 and R2, a service control center C and a service translator T. The service servers S1 and S2 are connected to the service router R1, and the service server S3 is connected to the service router R2. The service routers R1 and R2 both are connected to the service information center I and the service control center C. The service translator T is connected to the service control center C and the service router R1.

The service servers S1, S2. and S3 are designed to provide a processing capacity for at least one service, such as an online accounting service, an offline accounting service and the like.

The service servers are connected directly to the corresponding service routers. Each of the service servers is configured with physical address (for example, IP address) and corresponding port number of the service router directly connected to the service server. A service interaction request is sent by the service server to the physical address and corresponding port number configured. For example, the service servers S1 and S2 are configured with the physical address and corresponding port number of the service router R1, while the service server S3 is configured with the physical address and corresponding port number of the service router R2.

The service information center I is designed to store the routing information of various services handled by each service server. Here, the routing information includes the logic destination addresses and physical addresses of various services handled by each service server as well as the correspondence relationship between the logic destination addresses and the physical addresses.

The logic destination address of a service is designed to uniquely identify a service provided on a service server. The logic destination address of the service does not correspond to a service server but to a service function. The service function can be accomplished by a single server or by a plurality of servers in a distributed manner.

The physical address of a service may be the IP address and corresponding port number of the service server that provides the service. For example, for an online accounting service provided by the service server S1, the physical address may be 63,123,13.2:1900, When the service server S1 receives an online accounting request via port 1900, the online accounting process is triggered, and processing result is returned to the requester.

The service routers R1 and R2 are designed to route and forward the service interaction request and the response based on a service invocation protocol, and to connect different networks.

The essential routing and forwarding process is as follows. The corresponding physical address is searched from the service information center according to the logic destination address of the requested service in the service interaction request from the service server. The service interaction request is forwarded according to the physical address, and the received response to the service interaction request is forwarded to the service server that initiates the service interaction request.

An authentication function may further be added to the service routers R1 and R2. That is, when a service interaction request from a service server is received, it is judged whether the service server has right to request the service, If the service server does not have the right, the request is rejected. Furthermore, the service router R1 or R2 may modify the service interaction request and the response before routing and forwarding the service interaction request and the response,

The service control center C is responsible for scheduling and policy control for various services across the entire network, and is connected to the service routers R1 and R2.

In order to trigger the service interaction request to the service control center C, triggering criteria needs to be set in advance in the service routers R1 and R2. For example, it is judged whether the requested service is a specific service according to the logic destination address. When the service router R1 or R2 receives a service interaction request, it is judged whether contents of the request meet the triggering criteria set in advance. If the contents meet the triggering criteria set in advance, the service interaction request is triggered to the service control center C, and the policy control is performed the service center C. After the service control center C accomplishes the policy control, an instruction is sent to the related service router R1 or R2, The service router R1 or R2 accomplishes subsequent related routing work according to the received instruction.

The service translator T is designed to provide a service layer protocol translation service for communication between service servers. If two service servers cannot communicate with each other directly according to a service protocol, service translation is required. Two or more service protocols can be translated, by the service translation, into contents that can be identified and understood by the respective service servers.

The service translator T according to an embodiment of the present invention implements a service translation function for general purpose, which is designed to handle difference of protocol interfaces or parameter interfaces between two or more types of service servers in the service network system. For example, the service server S1 uses an Intelligent Network (IN) protocol based remote access data call interface, and the service server S2 uses an extensible Markup Language (XML) based remote access data call interface. Though the service servers S1 and S2 can collaborate with each other to accomplish mutual access function for service data logically, the two servers cannot be connected to each other directly due to the difference in interface definition. In this case, the service servers S1 and S2 need to be connected to a service translator T, which is responsible for adaptation between the two interfaces, so that such service servers are enabled to interact and access each other.

In the switching network for the service device according to an embodiment of the present invention, in order to search for a destination function entity (for example, a service server), a service-level addressing system is required. Such addressing system is different from the existing addressing system of a foundation network (for example, an IP network). Instead, such addressing system must be an addressing system independent of the foundation network. That is, the addressing method of such addressing system is an addressing method irrespective of the foundation network.

However, it should be noted that there may be specific bearer protocols in different bearer networks. For example, if the service network is borne over a packet switching based network, the bearer network employs IP protocol. If the service network is borne over a Signaling System No.7 (SS7) network, the bearer network employs Transaction Capabilities Application Part (TCAP) protocol.

An important aspect of the service layer addressing method employed in an embodiment of the present invention is specific definition and service categorization. The address of service servers employs a domain name mechanism similar to DOMAIN NAME SYSTEM (DNS), which includes service category name/ server name/domain 1/domain 2/service type/service sub-items/service parameters.

For example, the address of a Color Ring Back Tone (CRBT) server of China Mobile can be addressed as CRBT.CMCC.CN.

The charging service handling address for CRBT service may be CHBT.CMCC.CN/Charge/Parameter 1 ....

Because there are a variety of service types on the service layer, a service addressed code is required for each type of service. Service addressing based on a text mechanism instead of service addressing based on a digit mechanism may be employed. Of course, if intercommunication with encoding based on a digit mechanism is required, a digit address/text address translation service similar to Telephone Number Mapping Working Group (ENUM) service may be introduced.

The method for invoking from circuit domain can be in the form of SS7 point code or GT code. However, such service enhanced address translation server (similar to an ENUM server) is capable of translating addresses of the SS7 into addresses similar to a domain name mechanism. For example, 7F8CED can be translated into CRBT.CMCC.CN/Charge/Parameter 1....

After an addressing system is established in the service network in order to facilitate searching for a destination function entity, a specific service route function for searching for an entity at opposite end by means of the addressing system is provided according to the embodiment of the present invention.

Usually, in a point to point environment corresponding to the routing with static configuration, address information for communication is configured in advanced between servers, which may be in the form of a static route table. Encoding information on the service layer and the corresponding physical network addresses and ports are described therein.

In an environment with a single service router, the respective servers only need to be configured with the physical address and corresponding port of the service router.

In an environment with tree-type service network connections, the respective service server virtually only need to be configured with information of the service router that is directly connected. The route information about the service servers to be virtually accessed is returned to the service routers by the service information center, by means of being configured by each other between the service servers or accessing the service information center.

In addition to the routing based on the service protocol between networks of the same type, the service routers handle service routing between networks of different types. For example, the service protocol in IP network is encapsulated into the service protocol in the SS7 network. However, in principle, contents of data packets are not handled or modified.

In an embodiment of the present invention, when the service servers need to access each other, a common protocol (a service network request protocol) is required to establish a communication channel between the service servers. Such service network request protocol is designed to confirm the establishment of the communication channel, but itself is not a genuine application protocol. The application protocol is commonly established by the two parties after the service network request protocol is accepted.

In an embodiment of the present invention, a service invocation request is separated from service invocation interaction. That is, the protocols include a Service Invoke Protocol and a Service Interaction Description Protocol. The Service Invoke Protocol is mainly used to define interaction mode between two service layer devices, such as how many hand-shaking cycles are required and what the function of each hand-shaking cycle is, and the like. The Service Interaction Description Protocol is used to define the format of contents in a message, such as how many bits a first field occupies and what the meaning of the first field is, how many bits a second field occupies and what the meaning of the second field is, and the like. The Service Interaction Description Protocol is similar to a well-known Session Description Protocol (SDP) in function.

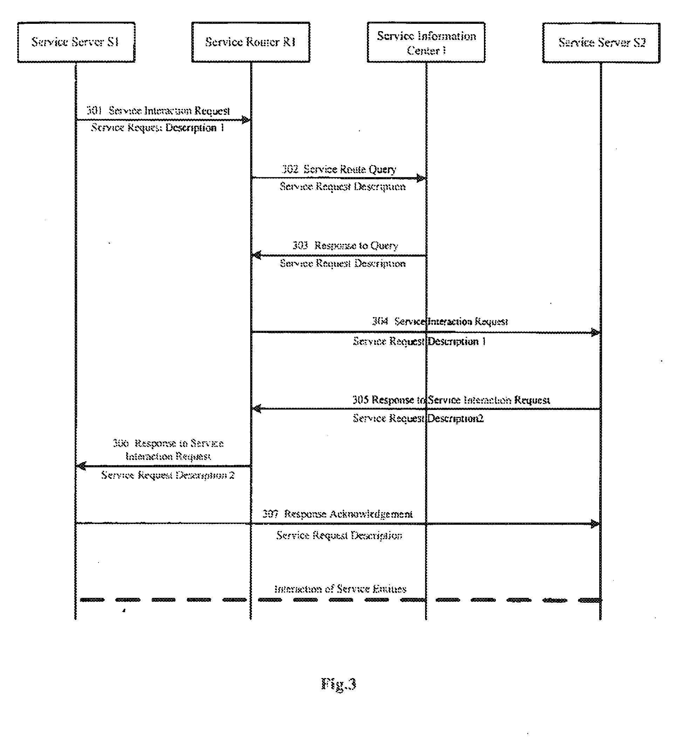

Figure 3 shows a flow diagram of message interaction upon service routing according to an embodiment of the present invention. As shown in Figure 3, in step 301, the service server S1 sends to the service router R1 a service interaction request with service request description 1.

In step 302, after receiving the service interaction request, the service router R1 sends to the service information center I a service route query message with a logic destination address of a service requested by the service server S1.

In step 303, the service information center I finds the corresponding physical address, that is, the IP address and port of the service server S2 that can provide the service requested by the service server S1, according to the logic destination address, and returns the IP address and port of the service server S2 to the service router R1 as the query result.

In step 304, the service router R1 forwards the service interaction request to the service server S2 according to the received query result. The service interaction request may be modified before the request is forwarded, and the modified request is forwarded.

in step 305. the service server S2 returns to the service router R1 a response to the service interaction request with service request description 2.

In step 306, the service router R1 forwards the received response to the service interaction request to the service server S 1 according to the IP address of the service server S 1, and the entire routing process is completed.

In step 307, after receiving the response to the service interaction request, the service server S1 can obtain the IP address of the service server S2, and directly sends to the service server S2 a response acknowledgement message indicating that the response to the service interaction request has been received.

Next, the genuine service application protocol is established between the service servers S1 and S2, and the service interaction is performed. At this time, the service translator T may be needed to participate in the interaction as required.

In above step 302, after the service router R1 receives the service interaction request from the service server S1, a sub-step of authentication can be added, in other words, it may be judged that whether the service server S1 has the right to request the service. If the service server S1 has the right, the subsequent steps are performed. If the service server S does not have the right, the service interaction request is rejected. The request may be rejected by returning a Reject message to the service server S1, or by discarding the service interaction request directly. The judge by the service router R1 may be based on the information related to the right and configured locally in advance or based on relevant information obtained from a third party server.

When the service servers communicate and interact with each other, the service routers may find and detect the procedures that require coordination and participation of the network service control center. Then, the service control center may send instructions to the service routers, so as to accomplish an integrated service.

For example, a shared invocation capability for the same service may be distributed to a plurality of service servers under assistance of the service control center.

The function of the service control is similar to an intelligent network. The service control center is equivalent to a Service Control Point (SCP) in the intelligent network, and each service is equivalent to a terminal. If a service A calls a service B which may be upgraded or failed, a setting may be made on the service router, so that when the service router receives a request for the service, the service router can trigger the request to the service control center for policy control, and then the subsequent procedures may be continued.

In an embodiment of the present invention, a service is identified by a logic destination address. When a service is invoked, the logic destination address of the service may be used, without the need for pointing to the physical address of the service server that provides the service, which facilitates the setting by the subscriber. Especially, after the service server that provides the service is changed, the subscriber invoking a corresponding service does not have to make any change to the setting, and only the operator is required to modify the correspondence relationship between the logic destination address and the physical address of the service in the service information center, which reduces the maintenance cost of the subscriber. The service server only requires to be configured with the physical address of the service router, and the service will automatically route the invocation of a service by the service server to a service server that provides the service.

After a service control center is introduced, policy control can be performed for the routing process of the service, which makes the routing process more flexible and can implement more advanced functions such as a shared service invocation and control for different versions of same service.

After a service translator is introduced, two service servers that use different service communication protocols can communicate with each other successfully, which enables the existing service handling resources to be made full use of.

In conclusion, according to embodiments of the present invention, the subscribers can choose contents freely, on the other hand the operator can also keep the service itself under control.

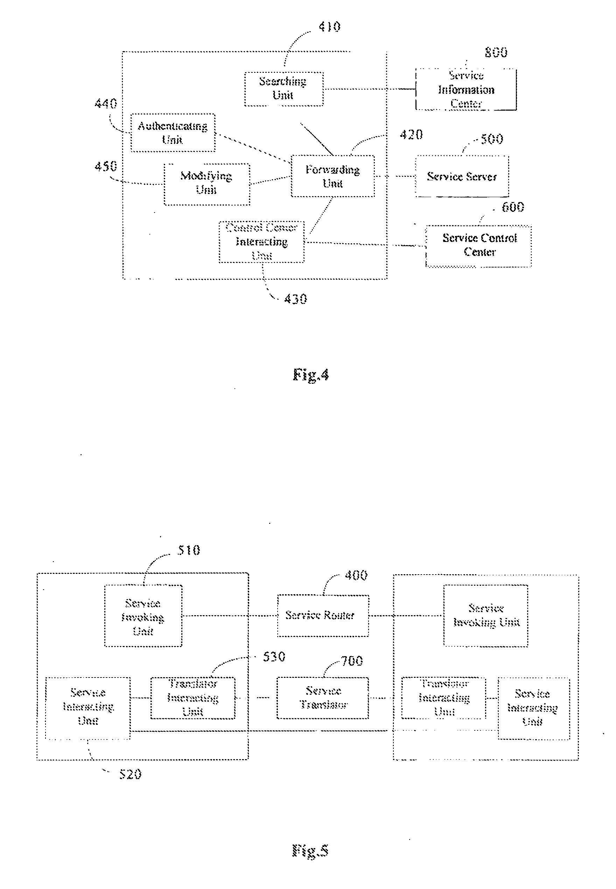

Referring to Figure 4, Figure 4 is a structural block diagram of a service router according to an embodiment of the present invention.

The service router according to an embodiment of the present invention includes a searching unit 410 and a forwarding unit 420. The searching unit 410 is designed to search for routing information in a service information center 800 after receiving a service interaction request from a service server 500. The forwarding unit 420 is designed to route and forward the service interaction request from the service server 500 and response according to the routing information.

According to an embodiment of the present invention, the routing information includes logic destination addresses and physical addresses of various services handled by each of the service servers and the correspondence relationship between the logic destination addresses and the physical addresses. The searching unit 410 is a physical address searching unit designed to search for the corresponding physical address in the service information center 800 according to the logic destination address of the requested service in the service interaction request from the service server 500.

The service router according to an embodiment of the present invention may further include a control center interacting unit 430 designed to route the service interaction request to a service control center 600 for policy control if the contents of the received service interaction request meets the criteria set in advance, and to accomplish subsequent routing related to the service interaction request according to the instruction from the service control center 600.

The service router according to an embodiment of the present invention may further include an authenticating unit 440 designed to perform authentication after a service interaction request is received. The service interaction request that fails to pass the authentication is rejected, and the forwarding unit 420 is notified to forward the service interaction request that passes the authentication.

The service router according to an embodiment of the present invention may further includes a modifying unit 450 designed to modify the service interaction request and the response before the service interaction request and the response is routed and forwarded.

Referring to Figure 5, Figure 5 is a structural block diagram of a service server according to an embodiment of the present invention.

The service server according to the embodiment of the present invention include a service invoking unit 510 and a service interacting unit 520. The service invoking unit 510 is designed to initiate a service interaction request routed and forwarded by a service router 400 or a response to the service interaction request. The service interacting unit 520 is designed to perform interaction of service entities after the service invocation is accomplished via the service router 400.

The service router 400 may employ the structure shown in Figure 4.

Furthermore, in view that the protocols may not match each other, the service server according to an embodiment of the present invention may further include a translator interacting unit 530 designed to interact with a service translator 700 to obtain the service layer protocol translation service provided by the service translator for communication between the service servers.

The present invention can reduce the maintenance on the service layer, For example, in the case that a plurality of service servers are to invoke one accounting function component, in the existing technical scheme all these service servers are directed to the physical address of the accounting function component. If the physical address of the accounting function component is changed, all of the service servers have to be adjusted. However, in the present invention, all of the service servers are directed to the identifier of the accounting function component. The service router finds address of the accounting function component from an service information center according to the identifier of the accounting function, and routes a message to the accounting function component according to the address. If the address of the accounting function component is changed, only the setting in the service information center needs to be adjusted and the service servers do not need to be changed, which reduce the cost of network maintenance.

## Claims

1. A switching network for a service device, the switching network comprising:
at least two service servers (S1, S2, S3, 500) designed to communicate with a service information center and at least one service router; wherein the at least two service servers are designed to provide processing capability for at least one service;
a service information center (I, 800) designed to store routing information of various services handled by each of the service servers; and
at least one service router (R1, R2, 400) designed to route and forward a service interaction request from the service server and a response according to the routing information in the service information center; wherein
the routing information comprises logic destination addresses and physical addresses of various services handled by each of the service server (S1, S2, S3, 500) and correspondence relationship between the logic destination addresses and the physical addresses, and
the logic destination address of a service is designed to uniquely identify a service provided on a service server (S1, S2, S3, 500), and
the physical address of a service is the IP address and corresponding port number of the service server (S1, S2, S3, 500) that provides the service;
a service control center (C, 600) designed to perform scheduling and policy control for various services across the entire network, wherein a shared invocation capability for the same service may be distributed to a plurality of service servers under assistance of the service control center(C, 600); and
the service router (R1, R2) comprises:
a physical address searching unit (410) designed to search for the corresponding physical address in the service information center (800) according to the logic destination address of the requested service in the service interaction request from the service server (S1, S2, S3, 500);
a forwarding unit (420) designed to forward the service interaction request to the service server (S1, S2, S3, 500) that provides the service according to the physical address, and to forward the received response to the service interaction request to the service server (S1, S2, S3, 500) that initiates the service interaction request; and
a control center interacting unit (430) designed to route the service interaction request to the service control center (C, 600) for policy control if contents of the received service interaction request meets criteria set in advance, and to accomplish subsequent routing related to the service interaction request according to an instruction from the service control center (C, 600).

2. The switching network for the service device according to claim 1, **characterized by** further comprising a service translator (T, 700) designed to provide a service layer protocol translation service for communication between the service servers (S1, S2, S3, 500).

3. The switching network for the service device according to any of claims 1-2, **characterized in that** the logic destination address of a service is addressed in the form of a domain name.

4. The switching network for the service device according to any of claims 1-2, **characterized in that** each of the service servers (S1, S2, S3, 500) is configured with the physical address and corresponding port number of the service router (R1, R2) directly connected to the service server (S1, S2, S3, 500), and the service server (S1, S2, S3, 500) sends the service interaction request to the configured physical address and corresponding port number.

5. The switching network for the service device according to any of claims 1-2, **characterized in that** the service router (S1, S2, S3, 500) further comprises a modifying unit (450) designed to modify the service interaction request and the response before the service interaction request and the response is routed and forwarded.

6. A switching method for a service device applicable to the network according to claim 1, the method comprising:
sending, by a service server, to a service router a service interaction request with the information of the requested service;
searching for corresponding routing information, by the service router, in a service information center according to the information of the requested service in the service interaction request from the service server, and forwarding the service interaction request to a service server that provides the service according to the routing information; and
forwarding, by the service router, the received response to the service interaction request to the service server that initiates the service interaction request, wherein the information carried in the service interaction request comprises logic destination address of the requested service, and
the routing information comprises logic destination address and physical address of the service, and the correspondence relationship between the logic destination address and the physical address, and
the logic destination address of a service is designed to uniquely identify a service provided on a service server, and
the physical address of a service is the IP address and corresponding port number of the service server that provides the service, wherein the searching for the corresponding routing information in the service information center comprises: searching for the corresponding physical address according to the logic destination address of the requested service;
routing, by the service router, the service interaction request to a service control center when the service interaction request is received and if contents of the service interaction request meets criteria set in advance;
performing, by the service control center, policy control for the received service interaction request, and sending an instruction to the service router, wherein a shared invocation capability for the same service may be distributed to a plurality of service servers under assistance of the service control center(C, 600); and
accomplishing, by the service router, subsequent routing related to the service interaction request according to the instruction from the service control center(C, 600).

7. The switching method for the service device according to claim 6, **characterized by** further comprising:
sending, by the service server that initiates the service interaction request, a response acknowledgement to the service server that provides the service according to the routing information after the response to the service interaction request is received; and
performing interaction of service entities between the service server that initiates the service interaction request and the service server that provides the service.

8. The switching method for the service device according to claim 6, **characterized by** further comprising: performing, by the service router, authentication upon receiving the service interaction request, and rejecting the service interaction request which fails to pass the authentication.

9. The switching method for the service device according to any of claims 6-8, **characterized by** further comprising:
sending, by the service servers, service data to a service translator if the service communication protocols of two of the service servers cannot match each other directly, the conversion of the service communication protocols being performed by the service translator and the converted service data being sent to another service server.

10. A service router (400) comprising:
a searching unit (410) designed to search for routing information of a requested service after receiving a service interaction request from a service server; and
a forwarding unit (420) designed to route and forward the service interaction request from the service server (500) and a response according to the routing information, wherein the routing information comprises logic destination addresses and physical addresses of various services handled by each service server and correspondence relationship between the logic destination addresses and the physical addresses, and
the logic destination address of a service is designed to uniquely identify the requested service provided on a service server (500), and
the physical address of a service is designed to identify the service server (500) that provides the service; and
the searching unit (410) is a physical address searching unit designed to search for the corresponding physical address in a service information center (800) according to the logic destination address of the requested service in the service interaction request from the service server(500);
a control center interacting unit (430) designed to route the service interaction request to a service control center (C, 600) for policy control if contents of the received service interaction request meets criteria set in advance, and to accomplish subsequent routing related to the service interaction request according to an instruction from the service control center (C, 600), wherein the service control center (C, 600) performs scheduling and policy control for various services across the entire network, wherein a shared invocation capability for the same service may be distributed to a plurality of service servers under assistance of the service control center(C, 600).

11. The service router according to claim 10, **characterized by** further comprising an authenticating unit (440) designed to perform authentication upon receiving the service interaction request, and to reject the service interaction request which fails to pass the authentication and notify the forwarding unit (420) to forward the service interaction request that passes the authentication.

12. The service router according to any of claims 10-11, **characterized by** further comprising a modifying unit (450) designed to modify the service interaction request and a response before the service interaction request and the response is routed and forwarded.

## Patentansprüche

1. Switching-Netzwerk für eine Diensteinrichtung, wobei das Switching-Netzwerk Folgendes umfasst:
mindestens zwei Dienstserver (S1, S2, S3, 500), die dafür ausgelegt sind, mit einer Dienstinformationsstelle und mindestens einem Dienstrouter zu kommunizieren; wobei die mindestens zwei Dienstserver dafür ausgelegt sind, Verarbeitungsfähigkeit für mindestens einen Dienst bereitzustellen;
eine Dienstinformationsstelle (I, 800), die dafür ausgelegt ist, Routinginformationen verschiedener durch jeden der Dienstserver abgewickelter Dienste zu speichern; und
mindestens einen Dienstrouter (R1, R2, 400), der dafür ausgelegt ist, eine Dienstinteraktionsanforderung von dem Dienstserver und eine Antwort gemäß den Routinginformationen in der Dienstinformationsstelle zu routen und weiterzuleiten; wobei
die Routinginformationen logische Zieladressen und physische Adressen verschiedener durch jeden der Dienstserver (S1, S2, S3, 500) abgewickelter Dienste und eine Korrespondenzbeziehung zwischen den logischen Zieladressen und den physischen Adressen umfassen und
die logische Zieladresse eines Dienstes dafür ausgelegt ist, einen auf einem Dienstserver (S1, S2, S3, 500) bereitgestellten Dienst eindeutig zu identifizieren, und die physische Adresse eines Dienstes die IP-Adresse und entsprechende Portnummer des Dienstservers (S1, S2, S3, 500) ist, der den Dienst bereitstellt;
eine Dienststeuerstelle (C, 600) dafür ausgelegt ist, Scheduling und Richtliniensteuerung für verschiedene Dienste über das gesamte Netzwerk hinweg durchzuführen, wobei eine geteilte Aufruffähigkeit für denselben Dienst unter der Hilfe der Dienststeuerstelle (C, 600) an mehrere Dienstserver verteilt werden kann; und
der Dienstrouter (R1, R2) Folgendes umfasst:
eine Sucheinheit (410) für physische Adressen, die dafür ausgelegt ist, gemäß der logischen Zieladresse des angeforderten Dienstes in der Dienstinteraktionsanforderung von dem Dienstserver (S1, S2, S3, 500) in der Dienstinformationsstelle (800) nach der entsprechenden physischen Adresse zu suchen;
eine Weiterleitungseinheit (420), die dafür ausgelegt ist, die Dienstinteraktionsanforderung gemäß der physischen Adresse zu dem Dienstserver (S1, S2, S3, 500) weiterzuleiten, der den Dienst bereitstellt, und die empfangene Antwort auf die Dienstinteraktionsanforderung zu dem Dienstserver (S1, S2, S3, 500) weiterzuleiten, der die Dienstinteraktionsanforderung einleitet; und
eine Steuerstellen-Interaktionseinheit (430), die dafür ausgelegt ist, die Dienstinteraktionsanforderung zur Richtliniensteuerung zu der Dienststeuerstelle (C, 600) zu routen, wenn Inhalte der empfangenen Dienstinteraktionsanforderung im Voraus gesetzte Kriterien erfüllen, und ein nachfolgendes Routing in Bezug auf die Dienstinteraktionsanforderung gemäß einer Anweisung von der Dienststeuerstelle (C, 600) zu erzielen.

2. Switching-Netzwerk für die Diensteinrichtung nach Anspruch 1, **dadurch gekennzeichnet, dass** es ferner einen Dienstübersetzer (T, 700) umfasst, der dafür ausgelegt ist, einen Dienstschichtprotokoll-Übersetzungsdienst zur Kommunikation zwischen den Dienstservern (S1, S2, S3, 500) bereitzustellen.

3. Switching-Netzwerk für die Diensteinrichtung nach einem der Ansprüche 1-2, **dadurch gekennzeichnet, dass** die logische Zieladresse eines Dienstes in Form eines Domänennamens adressiert wird.

4. Switching-Netzwerk für die Diensteinrichtung nach einem der Ansprüche 1-2, **dadurch gekennzeichnet, dass** jeder der Dienstserver (S1, S2, S3, 500) mit der physischen Adresse und entsprechenden Portnummer des Dienstrouters (R1, R2) direkt mit dem Dienstserver (S1, S2, S3, 500) verbunden konfiguriert ist und der Dienstserver (S1, S2, S3, 500) die Dienstinteraktionsanforderung zu der konfigurierten physischen Adresse und entsprechenden Portnummer sendet.

5. Switching-Netzwerk für die Diensteinrichtung nach einem der Ansprüche 1-2, **dadurch gekennzeichnet, dass** der Dienstrouter (S1, S2, S3, 500) ferner eine Modifiziereinheit (450) umfasst, die dafür ausgelegt ist, die Dienstinteraktionsanforderung und die Antwort zu modifizieren, bevor die Dienstinteraktionsanforderung und die Antwort geroutet und weitergeleitet werden.

6. Switching-Verfahren für eine Diensteinrichtung, das auf das Netzwerk nach Anspruch 1 anwendbar ist, wobei das Verfahren Folgendes umfasst:
Senden einer Dienstinteraktionsanforderung mit den Informationen des angeforderten Dienstes durch einen Dienstserver zu einem Dienstrouter;
Suchen nach entsprechenden Routinginformationen durch den Dienstrouter in einer Dienstinformationsstelle gemäß den Informationen des angeforderten Dienstes in der Dienstinteraktionsanforderung von dem Dienstserver und Weiterleiten der Dienstinteraktionsanforderung zu einem Dienstserver, der den Dienst bereitstellt, gemäß den Routinginformationen; und
Weiterleiten der empfangenen Antwort auf die Dienstinteraktionsanforderung durch den Dienstrouter zu dem Dienstserver, der die Dienstinteraktionsanforderung einleitet, wobei die in der Dienstinteraktionsanforderung geführten Informationen die logische Zieladresse des angeforderten Dienstes umfassen und
die Routinginformationen die logische Zieladresse und physische Adresse des Dienstes und die Korrespondenzbeziehung zwischen der logischen Zieladresse und der physischen Adresse umfassen und
die logische Zieladresse eines Dienstes dafür ausgelegt ist, einen auf einem Dienstserver bereitgestellten Dienst eindeutig zu identifizieren, und
die physische Adresse eines Dienstes die IP-Adresse und entsprechende Portnummer des Dienstservers ist, der den Dienst bereitstellt, wobei das Suchen nach den entsprechenden Routinginformationen in der Dienstinformationsstelle Folgendes umfasst: Suchen nach der entsprechenden physischen Adresse gemäß der logischen Zieladresse des angeforderten Dienstes;
Routen der Dienstinteraktionsanforderung durch den Dienstrouter zu einer Dienststeuerstelle, wenn die Dienstinteraktionsanforderung empfangen wird und wenn Inhalte der Dienstinteraktionsanforderung im Voraus gesetzte Kriterien erfüllen;
Durchführen von Richtliniensteuerung für die empfangene Dienstinteraktionsanforderung durch die Dienststeuerstelle und Senden einer Anweisung zu dem Dienstrouter, wobei eine geteilte Aufruffähigkeit für denselben Dienst unter der Hilfe der Dienststeuerstelle (C, 600) an mehrere Dienstserver verteilt werden kann; und
Erzielen eines nachfolgenden Routing in Bezug auf die Dienstinteraktionsanforderung durch den Dienstrouter gemäß der Anweisung von der Dienststeuerstelle (C, 600).

7. Switching-Verfahren für die Diensteinrichtung nach Anspruch 6, **dadurch gekennzeichnet, dass** es ferner Folgendes umfasst:
Senden einer Antwortbestätigung durch den Dienstserver, der die Dienstinteraktionsanforderung einleitet, zu dem Dienstserver, der den Dienst bereitstellt, gemäß den Routinginformationen, nachdem die Antwort auf die Dienstinteraktionsanforderung empfangen wird; und
Durchführen von Interaktion von Dienstentitäten zwischen dem Dienstserver, der die Dienstinteraktionsanforderung einleitet, und dem Dienstserver, der den Dienst bereitstellt.

8. Switching-Verfahren für die Diensteinrichtung nach Anspruch 6, **dadurch gekennzeichnet, dass** es ferner Folgendes umfasst: Durchführen von Authentifikation durch den Dienstrouter beim Empfang der Dienstinteraktionsanforderung und Zurückweisen der Dienstinteraktionsanforderung, die die Authentifikation nicht besteht.

9. Switching-Verfahren für die Diensteinrichtung nach einem der Ansprüche 6-8, **dadurch gekennzeichnet, dass** es ferner Folgendes umfasst:
Senden von Dienstdaten durch die Dienstserver zu einem Dienstübersetzer, wenn die Dienstkommunikationsprotokolle von zwei der Dienstserver nicht direkt miteinander übereinstimmen können, wobei die Umsetzung der Dienstkommunikationsprotokolle durch den Dienstübersetzer durchgeführt wird und die umgesetzten Dienstdaten zu einem anderen Dienstserver gesendet werden.

10. Dienstrouter (400), umfassend:
eine Sucheinheit (410), die dafür ausgelegt ist, nach dem Empfang einer Dienstinteraktionsanforderung von einem Dienstserver nach Routinginformationen eines angeforderten Dienstes zu suchen; und
eine Weiterleitungseinheit (420), die dafür ausgelegt ist, die Dienstinteraktionsanforderung von dem Dienstserver (500) und eine Antwort gemäß den Routinginformationen zu routen und weiterzuleiten, wobei die Routinginformationen logische Zieladressen und physische Adressen verschiedener durch jeden Dienstserver abgewickelter Dienste und eine Korrespondenzbeziehung zwischen den logischen Zieladressen und den physischen Adressen umfassen und die logische Zieladresse eines Dienstes dafür ausgelegt ist, den auf einem Dienstserver (500) bereitgestellten angeforderten Dienst eindeutig zu identifizieren, und
die physische Adresse eines Dienstes dafür ausgelegt ist, den Dienstserver (500) zu identifizieren, der den Dienst bereitstellt; und
die Sucheinheit (410) eine Sucheinheit für physische Adressen ist, die dafür ausgelegt ist, gemäß der logischen Zieladresse des angeforderten Dienstes in der Dienstinteraktionsanforderung von dem Dienstserver (500) in einer Dienstinformationsstelle (800) nach der entsprechenden physischen Adresse zu suchen;
eine Steuerstellen-Interaktionseinheit (430), die dafür ausgelegt ist, die Dienstinteraktionsanforderung zur Richtliniensteuerung zu einer Dienststeuerstelle (C, 600) zu routen, wenn Inhalte der empfangenen Dienstinteraktionsanforderung im Voraus gesetzte Kriterien erfüllen, und ein nachfolgendes Routing in Bezug auf die Dienstinteraktionsanforderung gemäß einer Anweisung von der Dienststeuerstelle (C, 600) zu erzielen, wobei die Dienststeuerstelle (C, 600) Scheduling und Richtliniensteuerung für verschiedene Dienste über das gesamte Netzwerk hinweg durchführt, wobei eine geteilte Aufruffähigkeit für denselben Dienst unter der Hilfe der Dienststeuerstelle (C, 600) an mehrere Dienstserver verteilt werden kann.

11. Dienstrouter nach Anspruch 10, **dadurch gekennzeichnet, dass** er ferner eine Authentifizierungseinheit (440) umfasst, die dafür ausgelegt ist, beim Empfang der Dienstinteraktionsanforderung Authentifikation durchzuführen und die Dienstinteraktionsanforderung, die die Authentifikation nicht besteht, zurückzuweisen und die Weiterleitungseinheit (420) zu benachrichtigen, die Dienstinteraktionsanforderung, die die Authentifikation besteht, weiterzuleiten.

12. Dienstrouter nach einem der Ansprüche 10-11, **dadurch gekennzeichnet, dass** er ferner eine Modifiziereinheit (450) umfasst, die dafür ausgelegt ist, die Dienstinteraktionsanforderung und eine Antwort zu modifizieren, bevor die Dienstinteraktionsanforderung und die Antwort geroutet und weitergeleitet werden.

## Revendications

1. Réseau de commutation pour dispositif de service, le réseau de commutation comprenant :
au moins deux serveurs de services (S1, S2, S3, 500) conçus pour communiquer avec un centre d'informations de services et au moins un routeur de services ; les au moins deux serveurs de services étant conçus pour fournir une capabilité de traitement d'au moins un service ;
un centre d'informations de services (1, 800) conçu pour mémoriser des informations de routage de divers services pris en charge par chacun des serveurs de services ; et
au moins un routeur de services (R1, R2, 400) conçu pour router et acheminer une requête d'interaction de service provenant du serveur de services et une réponse en fonction des informations de routage dans le centre d'informations de services ; dans lequel
les informations de routage comprennent des adresses destinataires logiques et des adresses physiques de divers services pris en charge par chacun des serveurs de services (S1, S2, S3, 500) et la relation de correspondance entre les adresses destinataires logiques et les adresses physiques ; et
l'adresse destinataire logique d'un service est conçue pour identifier de manière unique un service fourni sur un serveur de services (S1, S2, S3, 500), et
l'adresse physique d'un service est l'adresse IP et le numéro de port correspondant du serveur de services (S1, S2, S3, 500) qui fournit le service ;
un centre de commande de services (C, 600) conçu pour effectuer un ordonnancement et un contrôle de politique pour divers services dans tout le réseau, dans lequel une capabilité de sollicitation partagée pour le même service peut être répartie sur une pluralité de serveurs de services sous l'assistance du centre de commande de services (C, 600) ; et
le routeur de services (R1, R2) comprend :
une unité de recherche d'adresse physique (410) conçue pour rechercher l'adresse physique correspondante dans le centre d'informations de services (800) en fonction de l'adresse destinataire logique du service requis dans la requête d'interaction de service provenant du serveur de services (S1, S2, S3, 500) ;
une unité d'acheminement (420) conçue pour acheminer la requête d'interaction de service jusqu'au serveur de services (S1, S2, S3, 500) qui fournit le service en fonction de l'adresse physique, et acheminer la réponse à la requête d'interaction de service reçue jusqu'au serveur de services (S1, S2, S3, 500) qui lance la requête d'interaction de service ; et
une unité d'interaction avec le centre de commande (430) conçue pour router la requête d'interaction de service jusqu'au centre de commande de service (C, 600) en vue d'un contrôle de politique si le contenu de la requête d'interaction de service reçue répond à des critères préétablis, et assurer le routage ultérieur associé à la requête d'interaction de service en fonction d'une instruction provenant du centre de commande de services (C, 600).

2. Réseau de commutation pour le dispositif de service selon la revendication 1, **caractérisé en ce qu'**il comprend en outre un traducteur de service (T, 700) conçu pour fournir un service de traduction de protocole de couche de service pour la communication entre les serveurs de services (S1, S2, S3, 500).

3. Réseau de commutation pour le dispositif de service selon l'une quelconque des revendications 1 et 2, **caractérisé en ce que** l'adresse destinataire logique d'un service est adressée sous la forme d'un nom de domaine.

4. Réseau de commutation pour le dispositif de service selon l'une quelconque des revendications 1 et 2, **caractérisé en ce que** chacun des serveurs de services (S1, S2, S3, 500) est configuré avec l'adresse physique et le numéro de port correspondant du routeur de services (R1, R2) directement connecté au serveur de services (S1, S2, S3, 500), et le serveur de services (S1, S2, S3, 500) envoie la requête d'interaction de service à l'adresse physique et au numéro de port correspondant configurés.

5. Réseau de commutation pour le dispositif de service selon l'une quelconque des revendications 1 et 2, **caractérisé en ce que** le routeur de services (S1, S2, S3, 500) comprend en outre une unité de modification (450) conçue pour modifier la requête d'interaction de service et la réponse avant que la requête d'interaction de service et la réponse soient routées et acheminées.

6. Procédé de commutation pour un dispositif de service applicable au réseau selon la revendication 1, le procédé comprenant :
l'envoi, par un serveur de services, à un routeur de services d'une requête d'interaction de service avec les informations du service requis ;
la recherche d'informations de routage correspondantes, par le routeur de services, dans un centre d'informations de service en fonction des informations du service requis dans la requête d'interaction de service provenant du serveur de services, et l'acheminement de la requête d'interaction de service jusqu'à un serveur de services qui fournit le service en fonction des informations de routage ; et
l'acheminement, par le routeur de services, de la réponse à la requête d'interaction de service reçue jusqu'au serveur de services qui lance la requête d'interaction de service, les informations incluses dans la requête d'interaction de service comprenant l'adresse destinataire logique du service requis, et
les informations de routage comprennent l'adresse destinataire logique et l'adresse physique du service, et la relation de correspondance entre l'adresse destinataire logique et l'adresse physique ; et
l'adresse destinataire logique d'un service est conçue pour identifier de manière unique un service fourni sur un serveur de services ; et
l'adresse physique d'un service est l'adresse IP et le numéro de port correspondant du serveur de services qui fournit le service, la recherche des informations de routage correspondantes dans le centre d'informations de services comprenant : la recherche de l'adresse physique correspondante en fonction de l'adresse destinataire logique du service requis ;
le routage, par le routeur de services, de la requête d'interaction de service jusqu'à un centre de commande de services quand la requête d'interaction de service est reçue et si le contenu de la requête d'interaction de service satisfait des critères préétablis ;
l'exécution, par le centre de commande de services, d'un contrôle de politique de la requête d'interaction de service reçue, et l'envoi d'une instruction au routeur de services, dans lequel une capabilité de sollicitation partagée pour le même service peut être répartie sur une pluralité de serveurs de services sous l'assistance du centre de commande de services (C, 600) ; et
l'accomplissement, par le routeur de services, du routage ultérieur associé à la requête d'interaction de service en fonction de l'instruction provenant du centre de commande de services (C, 600).

7. Procédé de commutation pour le dispositif de service selon la revendication 6, **caractérisé en ce qu'**il comprend en outre :
l'envoi, par le serveur de services qui lance la requête d'interaction de service, d'un acquittement de réponse au serveur de services qui fournit le service en fonction des informations de routage après que la réponse à la requête d'interaction de service est reçue ; et
l'exécution d'une interaction d'entités de service entre le serveur de services qui lance la requête d'interaction de service et le serveur de services qui fournit le service.

8. Procédé de commutation pour le dispositif de service selon la revendication 6, **caractérisé en ce qu'**il comprend en outre : l'exécution, par le routeur de services, d'une authentification à la réception de la requête d'interaction de service et le rejet de la requête d'interaction de service qui ne réussit pas l'authentification.

9. Procédé de commutation pour le dispositif de service selon l'une quelconque des revendications 6 à 8, **caractérisé en ce qu'**il comprend en outre :
l'envoi, par les serveurs de services, de données de service à un traducteur de services si les protocoles de communication de service de deux des serveurs de services ne correspondent pas directement l'un à l'autre, la conversion des protocoles de communication de services étant exécutée par le traducteur de services et les données de service converties étant envoyées à un autre serveur de services.

10. Routeur de services (400) comprenant :
une unité de recherche (410) conçue pour rechercher des informations de routage d'un service requis après la réception d'une requête d'interaction de service depuis un serveur de services ; et
une unité d'acheminement (420) conçue pour router et acheminer la requête d'interaction de service provenant du serveur de services (500) et une réponse en fonction des informations de routage, les informations de routage comprenant des adresses destinataires logiques et des adresses physiques de divers services pris en charge par chaque serveur de services et une relation de correspondance entre les adresses destinataires logiques et les adresses physiques ; et
l'adresse destinataire logique d'un service est conçue pour identifier de manière unique le service requis fourni sur un serveur de services (500), et
l'adresse physique d'un service est conçue pour identifier le serveur de services (500) qui fournit le service, et
l'unité de recherche (410) est une unité de recherche d'adresse physique conçue pour rechercher l'adresse physique correspondante dans un centre d'informations de services (800) en fonction de l'adresse destinataire logique du service requis dans la requête d'interaction de service provenant du serveur de services (500) ;
une unité d'interaction avec le centre de commande (430) conçue pour router la requête d'interaction de service jusqu'à un centre de commande de services (C, 600) de contrôle de politique si le contenu de la requête d'interaction de service reçue répond à des critères préétablis, et assurer un routage ultérieur associé à la requête d'interaction de service en fonction d'une instruction provenant du centre de commande de services (C, 600), le centre de commande de services (C, 600) exécutant un ordonnancement et un contrôle de politique pour divers services dans tout le réseau, dans lequel une capabilité de sollicitation partagée pour le même service peut être répartie sur une pluralité de serveurs de services sous l'assistance du centre de commande de services (C, 600).

11. Routeur de services selon la revendication 10, **caractérisé en ce qu'**il comprend en outre une unité d'authentification (440) conçue pour exécuter une authentification à la réception de la requête d'interaction de service et rejeter la requête d'interaction de service qui ne réussit pas l'authentification et notifier à l'unité d'acheminement (420) d'acheminer la requête d'interaction de service qui réussit l'authentification.

12. Routeur de services selon l'une quelconque des revendications 10 et 11, **caractérisé en ce qu'**il comprend en outre une unité de modification (450) conçue pour modifier la requête d'interaction de service et une réponse avant que la requête d'interaction de service et la réponse soient routées et acheminées.
